# EUROPEAN PATENT SPECIFICATION

(11) **EP 4 085 780 B1**
(45) Date of publication and mention of the grant of the patent: **31.01.2024**
(21) Application number: 22174209.1
(22) Date of filing: 16.11.2018
(51) Int. Cl.: A43B 1/04, A43B 23/02, A43B 5/02

(54) **MULTI-LAYER BRAIDED UPPER**
MEHRSCHICHTIGES GEFLOCHTENES OBERMATERIAL
TIGE TRESSÉE MULTICOUCHE

(30) Priority: 20.11.2017 US 201762588473 P; 15.11.2018 US 201816192129
(43) Date of publication of application: 09.11.2022
(62) Divisional of application: 18836703.1
(73) Proprietor: NIKE Innovate C.V., Beaverton, OR 97005-6453 (US)
(72) Inventor: Tina M., CASILLAS, Beaverton, 97005-6453 (US); Eun Kyung, LEE, Beaverton, 97005-6453 (US)
(74) Representative: Müller-Boré & Partner Patentanwälte PartG mbB

(56) References cited:
- WO-A1-2016/093961
- US-A1- 2007 022 627
- US-A1- 2015 282 564
- US-A1- 2017 035 149

## Description

### FIELD OF THE INVENTION

The present invention relates to a method of manufacturing an upper for an article of footwear and a braided article of footwear and more particularly to a footwear upper having a braided structure with an outer coating that covers at least a portion of the braided upper.

### BACKGROUND OF THE INVENTION

Traditional shoes are often made from textiles or materials that have uppers that are cut to a desired shape and stitched together. Newer methods also now include forming footwear uppers from a knitted textile. Still newer methods involve braiding a material for use as the footwear upper. Aspects herein relate to braided structures for footwear that are selectively coated in some areas,

Document US 2007/022627 describes an article of footwear including a textile upper member with an exterior constructed from knitted textile material, the exterior including a region with stability ribs and a second unribbed region. The region(s) having stability ribs may be located, for example: along a lateral mid-foot side of the upper member; along a forefoot portion of the upper member; and/or along a medial mid-foot side of the upper member. Other articles of footwear include an upper member having exterior and interior textile elements joined together in a stitch-less manner at the foot-receiving opening of the upper member. The exterior surface of this upper member also may include one or more regions with stability structures. The stitch-less textile engagement techniques can provide a smooth, non-bulky. and breathable joint that docs not require thick layers of textile material in contact with or adjacent the wearer's foot.

### SUMMARY OF THE INVENTION

This Summary provides a high-level overview of the disclosure and introduces a selection of concepts that are further described in the Detailed Description below. This Summary is not intended to identify key features or essential features of the claimed subject matter, nor is it intended to be used as an aid in isolation to determine the scope of the claimed subject matter.

Aspects herein generally relate to a multi-layer upper for an article of footwear. The upper has a medial side and a lateral side, and a toe end and a heel end. The upper has an inner booty, at least partially surrounded by an outer braided shell, made from a number of yarns that are braided together. In selected locations, a coating covers portions of the outer braided shell. In some aspects, this coating creates a textured surface. In some aspects this textured surface covers at least a portion of the bottom of the article of footwear.

The claimed invention is defined by the features set forth in the appended independent claims. Additional embodiments of the claimed invention are defined by the dependent claims.

### BRIEF DESCRIPTION OF THE DRAWING

Aspects herein are described in detail below with reference to the attached drawing figures, wherein:
FIG. 1 depicts an article of footwear, in accordance with aspects herein;
FIG. 2 depicts a cross-section taken along line 2-2 of FIG. 1;
FIG. 3 depicts a cross-section taken along line 3-3 of FIG. 1;
FIG. 4 depicts an enlarged partial view of the encircled region 4 in FIG. 2;
FIG. 5 depicts an enlarged partial view of the encircled region 5 in FIG. 2;
FIG. 6 depicts a schematic view of an exemplary braiding machine;
FIG. 7 depicts a perspective view of an exemplary braiding machine, illustrating the carriages and rotor metals;
FIG. 8 depicts a view similar to FIG. 7, but with the rotor metals moving the carriages;
FIG. 9 depicts a view similar to FIG. 8, but showing the completion of the exemplary movement of FIG. 8;
FIG. 10 depicts an exemplary method for making the article of FIGS. 1-5;
FIG. 11 depicts an article of footwear, in accordance with aspects herein;
FIG. 12 depicts a cross-sectional view taken along line 12-12 of FIG. 11;
FIG. 13 depicts a cross-sectional view taken along line 13-13 of FIG. 11;
FIG. 14 is an enlarged view of the encircled region of FIG. 12 labeled 14; and
FIG. 15 depicts an exemplary method for making the article of FIGS. 11-14.

### DETAILED DESCRIPTION OF THE INVENTION

Aspects herein provide a multi-layer upper for an article of footwear. The upper has a medial side and a lateral side, and a toe end and a heel end. The upper has an inner knit booty, at least partially surrounded by an outer braided shell, made from a number of yarns that are braided together. In selected locations, the inner knit booty and the outer braided shell are coupled together with a thermoplastic material disposed over the outer braided shell. In other selected locations, the inner booty and the outer braided shell may be coupled together with a thermoplastic material disposed between the outer braided shell and the inner booty. In selected locations, a coating covers portions of the outer braided shell. In some aspects, this coating creates a textured surface. In some aspects this textured surface covers at least a portion of the bottom of the article of footwear.

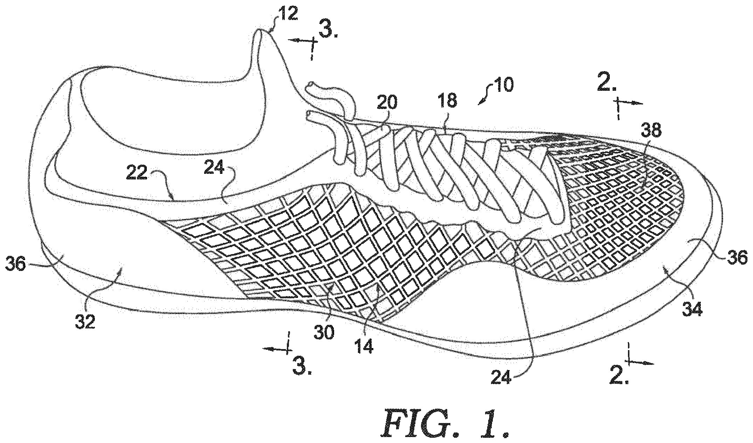

An article of footwear 10 is shown in FIG. 1 with a multi-layer upper having an inner booty 12, and an outer braided shell 14. In one aspect, the inner booty 12 is knitted. In one aspect, the inner booty 12 is formed in a circular knitting process. An exemplary circular knitted upper can be formed as disclosed in U.S. Patent 6,931,762, issued on August 23, 2005. Inner booty 12 is formed primarily from multiple yarns that are mechanically manipulated through an interlooping process to produce a unitary structure. Various interlooping techniques are available for mechanically manipulating yarn into inner booty 12. In general, however, interlooping involves the formation of a plurality of rows and columns of intermeshed loops, which are conventionally referred to as courses and wales. Knitting is generally recognized as being the most common method of interlooping. The configuration of inner booty 12 is selected to generally conform to the shape of the foot. In some aspects, the knitting process that produces inner booty 12 forms a plurality of sections, each section being specifically located, knit in a specific manner, and knit with a specific type of yarn to provide each section with different physical properties. The knit can be a warp knit, or a weft knit, in some aspect. In order to provide the stretch and recovery properties for inner booty 12, a yarn that incorporates an elastane fiber may be utilized. Elastane fibers are available from E.I. duPont de Nemours Company under the LYCRA trademark. Such fibers may have the configuration of covered LYCRA, wherein the fiber includes a LYCRA core that is surrounded by a nylon sheath. Other fibers or filaments exhibiting elastic properties may also be utilized in inner booty 12.

Yarn is defined as an assembly having a substantial length and relatively small cross-section that is formed of at least one filament or a plurality of fibers. Fibers have a relatively short length and require spinning or twisting processes to produce a yarn of suitable length for use in an interlooping process. Common examples of fibers are cotton and wool. Filaments, however, have an indefinite length and may merely be combined with other filaments to produce a yarn suitable for use in an interlooping process. Modern filaments include a plurality of synthetic materials such as rayon, nylon, polyester, and acrylic. Yarn may be formed of a single filament (conventionally referred to as a monofilament yarn) or a plurality of individual filaments. Yarn may also be formed of separate filaments formed of different materials, or the yarn may be formed of filaments that are each formed of two or more different materials. Similar concepts also apply to yarns formed from fibers. Accordingly, yarns may have a variety of configurations that generally conform to the definition provided above. The characteristics of the various yarns selected for inner booty 12 depend primarily upon the materials that form the various filaments and fibers. Cotton, for example, provides a soft hand, natural aesthetics, and biodegradability. Elastane fibers, as discussed above, provide substantial stretch and recoverability. Rayon provides high luster and moisture absorption. Wool also provides high moisture absorption, in addition to insulating properties. Polytetrafluoroethylene coatings may provide a low friction contact between the textile and the skin, thereby limiting the formation of blisters. Nylon is a durable and abrasion-resistant material with high strength. Finally, polyester is a hydrophobic material that also provides relatively high durability. Accordingly, the materials comprising the yarn may be selected to impart a variety of physical properties to inner booty 12. The physical properties may include, for example, strength, stretch, support, stiffness, recovery, fit, and form.

A narrow-tube circular knitting machine may be utilized to manufacture inner booty 12. An example of a circular knitting machine that may be utilized to form inner booty 12 is discussed in earlier-referenced and incorporated U.S. Patent 6,931,762. In general, circular knitting machines form a tube-like structure. The knit booty 12 can be knitted to shape (somewhat tubular, corresponding to the shape of a foot), or can be cut-and-sewn from the circular knit. In another aspect, the knit booty 12 can be made of a flat knit, and again can either be knitted to shape or can be cut-and-sewn from a flat knit material. In some aspects, the booty 12 can be made from a warp knit, weft knit or circular knit material.

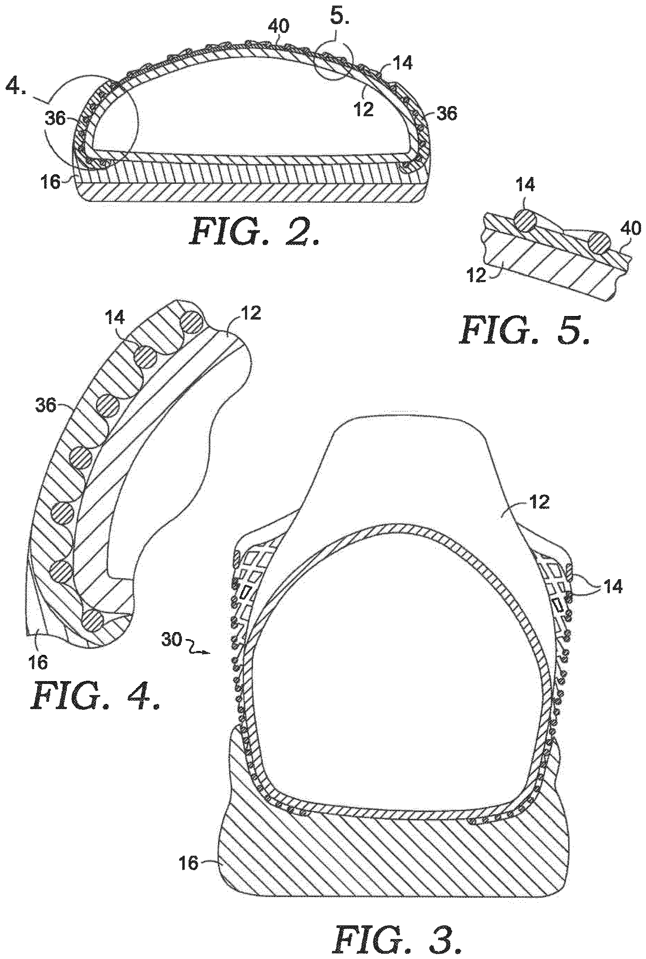

The outer braided shell 14 is disposed above, or on top of, the inner booty 12. As best seen in FIGS. 2 and 3, outer braided shell 14 extends from under the inner booty 12, where it is sandwiched between the inner booty 12 and an outsole/midsole structure 16. In some aspects, outer braided shell 14 is also formed as a tube, and generally surrounds inner booty 12 (going completely under inner booty 12 from one side to the other, as viewed, for example in FIG. 3). Outer braided shell 14, in some aspects has an open throat area 18 (FIG. 1), provided with laces 20. In addition, outer braided shell 14, has an open ankle area 22, corresponding to the opening in inner booty 12, used to allow a user's foot to access the footwear. In some aspects, the edges of the throat area 18 and ankle area 22 may be provided with a reinforcing band 24. Band 24 can be provided, for example, by a higher-density of braid, an overlay, or other reinforcing structure.

In some areas, the outer braided shell 14 is not coupled to inner booty 12, such as the area generally mid-foot indicated by arrow 30. In this area, the outer braided shell 14 can move independently of the inner booty 12. In this area, as shown in FIG. 3, outer braided shell 14 is retained relative to inner booty 12 only at the lower edge, where it is sandwiched between the inner booty 12 and the outsole/midsole structure 16. Note that a separate midsole and outsole could be provided. For purposes of this disclosure, the nature of the outsole/midsole structure 16 can vary greatly, and so is shown somewhat schematically.

In other areas, the outer braided shell 14 is coupled to the inner booty 12, such as in the heel area indicated by arrow 32 or the toe box area indicated by arrow 34. As best seen in FIGS. 2 and 4, in one area, toe box area 34 includes a layer of skin 36 that is disposed over the outer braided shell 14. The skin 36 is, a thermoplastic material, such as a thermoplastic polymeric composition. In such aspects, the thermoplastic polymeric composition can include one or more of polyurethanes (such as TPU), polyamides, polyolefins, or nylons that transition when thermoformed. As used herein, "thermoforming" refers to a process for turning a thermoplastic composition from a solid state to a softened or liquid state when subjected to certain temperatures at or above its melting point and then transitions back to the solid state when cooled. In such aspects, the thermoplastic material in this portion of the toe box area 34 can provide additional stability and rigidity, as well as function as a moisture barrier. A similar skin 36 is disposed over the heel area 32 to couple the inner booty 12 to the outer braided shell 14 in selected portions of the heel area 32. When transformed by heat, the skin 36 penetrates through openings in the outer braided shell 14 and adheres to both the outer braided shell 14 and the portions of the inner booty 12, coupling the inner booty 12 to the outer braided shell 14. In some aspects, the skin 36 will have an outer texture formed by the braids in the outer braided shell 14. As best seen in FIGS. 2 and 5, in one toe box area 38, a layer 40 is disposed between outer braided shell 14 and inner booty 12 (as opposed to being disposed over the outer braided shell 14 as discussed above). The layer 40, in some aspects, can be formed of the same material as skin 36, or can be formed of a different hot-melt material. The melt temperature of both skin 36 and layer 38 is lower than the yarns used in inner booty 12 and outer braided shell 14. With layer 40 between the inner booty 12 and the outer layer 14, a different aesthetic is achieved, and performance characteristics may also be varied.

In general, the braiding for outer braided shell 14 is a process of interlacing or interweaving three or more yarns diagonally to a product axis in order to obtain a thicker, wider, or stronger product or in order to cover (overbraid) some profile. Interlacing diagonally means that the yarns make an angle with the product axis, which can be between 1° and 89° but is usually in the range of 30° - 80°. This angle is called the braiding angle. Braids can be linear products (ropes), hollow tubular shells, or solid structures (one, two, or three-dimensional textiles) with constant or variable cross-sections, and of closed or open appearance.

As used herein, the yarns used for braiding may be formed of different materials having different properties. The properties that a particular yarn will impart to an area of a braided component partially depend upon the materials that form the yarn. Cotton, for example, provides a softer product, natural aesthetics, and biodegradability. Elastane and stretch polyester each provide substantial stretch and recovery, with stretch polyester also providing recyclability. Rayon provides high luster and moisture absorption. Wool also provides high moisture absorption, in addition to insulating properties and biodegradability. Nylon is a durable and abrasion-resistant material with relatively high strength. Polyester is a hydrophobic material that also provides relatively high durability. In addition to materials, other aspects of the yarn selected for formation of a braided component may affect the properties of the braided component. For example, a yarn may be a monofilament or a multifilament. The yarn may also include separate filaments that are each formed of different materials. In addition, the yarn may include filaments that are each formed of two or more different materials, such as a bicomponent yarn with filaments having a sheath-core configuration or two halves formed of different materials.

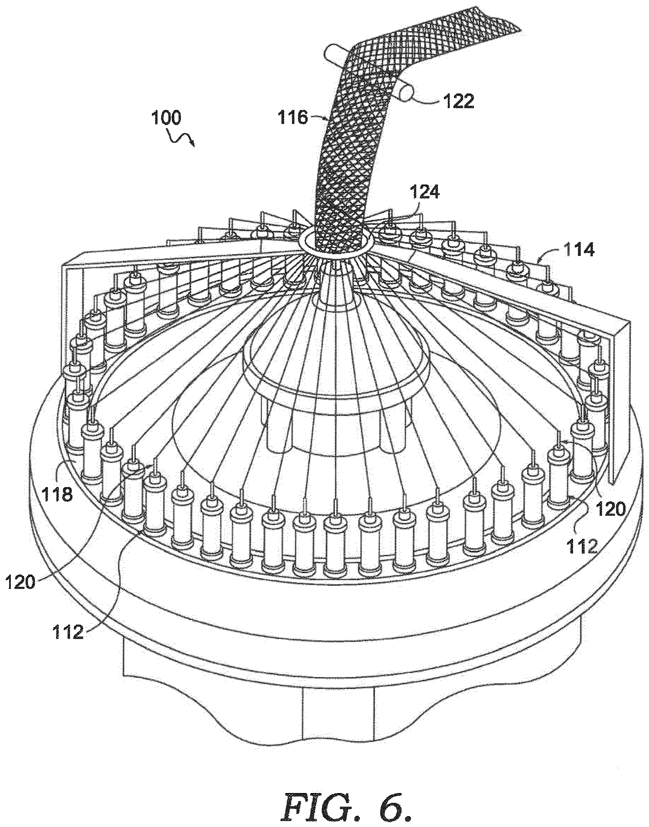

As stated above, braided structures can be formed as tubular braids on a braiding machine, such as a radial, axial, or lace braiding machine. One example of a lace braiding machine can be found in Ichikawa, EP 1 486 601, granted May 9, 2007, entitled "Torchon Lace Machine," and EP No. 2 657 384, published Oct. 30, 2013, entitled "Torchon Lace Machine." The upper portion of an exemplary braiding machine 100 is shown in FIG. 6. Braiding machine 100 includes a plurality of spools 112. In some embodiments, the spools 112 carry the yarn 114 selected for braiding. The yarns 114 from individual spools are selectively interlaced or intertwined with one another by the braiding machine 100. This interlacing or intertwining of strands forms a braided structure 116, as further described below. Each of the spools 112 is supported and constrained by a track 118 about the circumference of the braiding machine 100. Each spool 112 has a tensioner 120 (shown schematically in FIG. 6) that operates, along with a roller 122, to maintain a desired tension in the yarns 114 and the braided structure 116. As the yarns 114 extend upwardly, they pass through a braid ring 124 that is generally considered the braiding point. The braiding point is defined as the point or area where yarns 114 consolidate to form braid structure 116. At or near ring 124, the distance between yarns 114 from different spools 112 diminishes. As the distance between yarns 114 is reduced, the yarns 114 intermesh or braid with one another in a tighter fashion and are pulled linearly by roller 122.

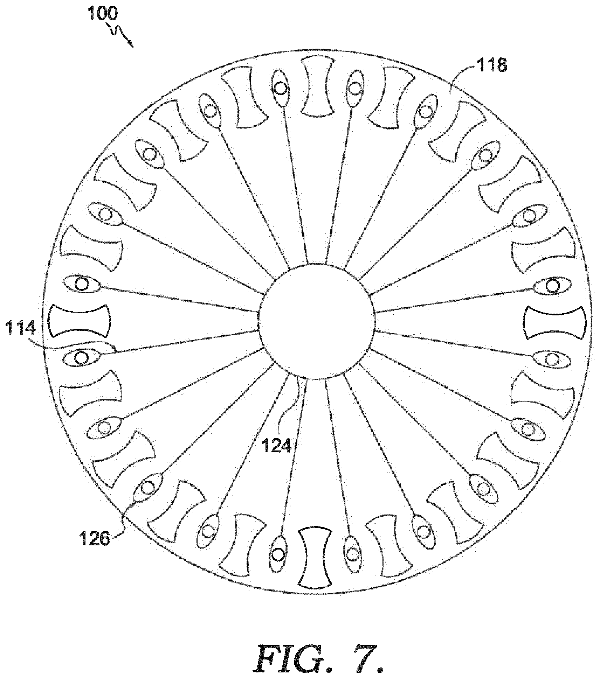

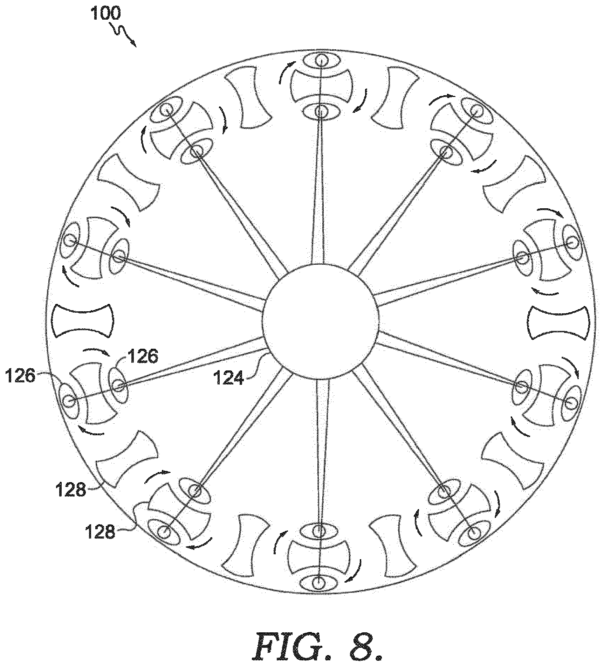

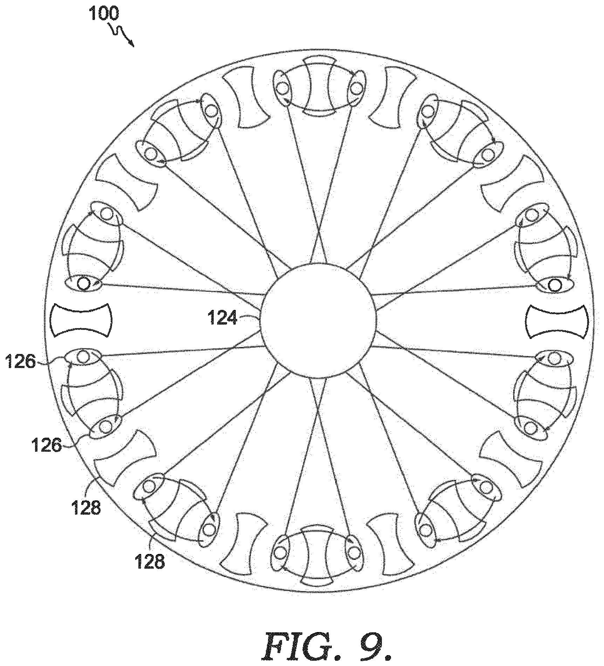

As best seen in FIG. 7, each spool 112 is carried and supported by a carriage 126. Each spool 112 is movable about the circumference of the track 118 by rotor metals 128. As described on the Torchon Lace Machine referenced previously, and disclosed in EP 1 486 601, each of the rotor metals 128 can be moved clockwise or counterclockwise. In contrast to radial braiding machines or fully non-jacquard machines, in a lace braiding machine, each rotor metal is not intermeshed with the adjacent rotor metal. Instead, each rotor metal 128 may be selectively independently movable. As can be seen by comparing FIG. 7 to FIG. 9, as the rotor metals 128 rotate, they move the carriages 126, and thus the spools 112 supported on the carriages 126, by moving them about the circumference of the track 118. The braiding machine 100 is programmable such that the individual rotor metals 128 rotate the carriages 126, and thus the spools 112, to move them about the circumference of the track 118. As an individual spool 112 moves relative to an adjacent spool 112, the yarns 114 carried on the spools 112 interweave to create a desired braid pattern. The movement of spools 112 may be preprogrammed to form particular shapes, designs, and thread densities of a braided component or portions of a braided component. By varying the rotation and location of individual spools 112, various braid configurations may be formed. Such an exemplary braiding machine may form intricate braid configurations including both jacquard and non-jacquard braid configurations or geometries. Such configurations and geometries offer design possibilities beyond those offered by other textiles, such as knitting.

In some aspects, the size of braiding machine 100 may be varied. It should be understood that the braiding machine 100 shown and described is for illustrative purposes only. In some aspects, braiding machine 100 may be able to accept 144 carriages, although other sizes of braiding machines, carrying different numbers of carriages and spools, is possible and is within the scope of this disclosure. By varying the number of carriages and spools within a braiding machine, the density of the braided structure as well as the size of the braided component may be altered.

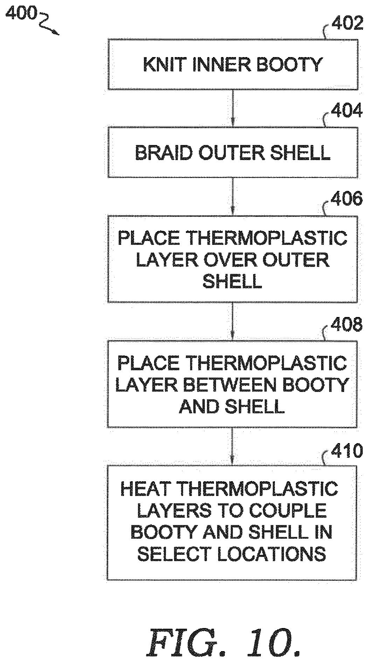

A method 400 for manufacturing a multi-layer upper for an article of footwear is shown in FIG. 10. The method includes knitting an inner booty, as shown at block 402. The inner booty of block 402 in some aspects has the characteristics described above with respect to inner booty 12. The method continues at block 404 by braiding an outer braided shell. The outer braded shell of block 404, in some aspects, has the characteristics described above with respect to outer braided shell 14. In some aspects, the method 400 continues at block 406 by placing a thermoplastic material over the outer braided shell in selected locations. Similarly, in some aspects, the method 400 includes, as shown at block 408, placing a thermoplastic layer between the inner booty and the outer braided shell in selected locations. As shown at block 410, the method continues by heating the thermoplastic layers of blocks 406 and 408 to couple the inner booty and the outer braided shell together at these selected locations.

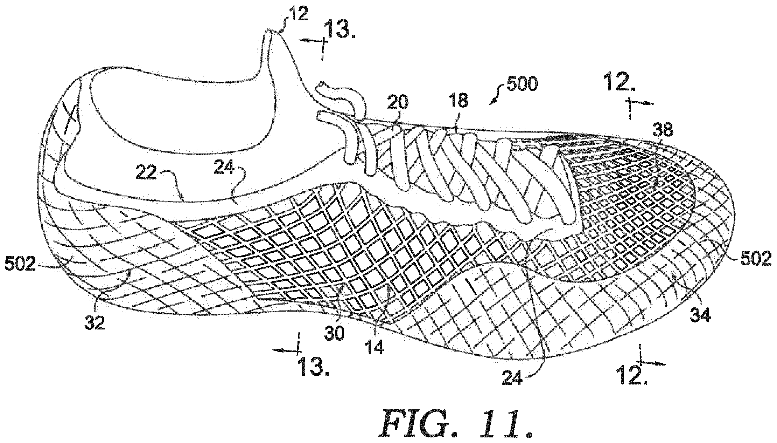

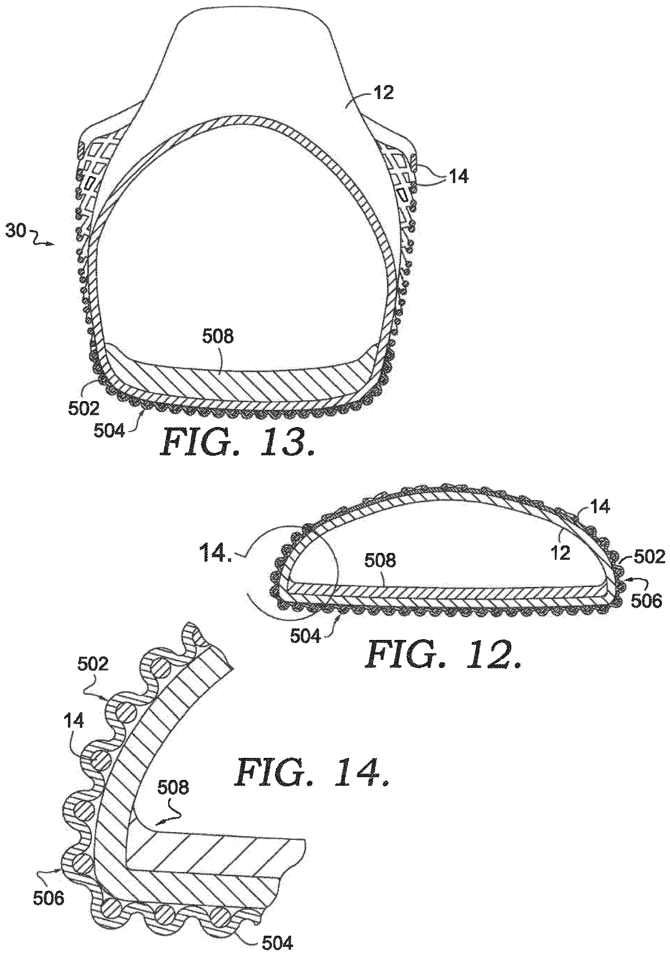

In other aspects, as shown in FIGs. 11-14, a braided article of footwear 500 includes the inner booty 12, constructed as described above, along with the braided shell 14, also constructed as described above. In one aspect, the braided shell 14 is covered with a coating 502 in selected areas of the braided footwear upper 500. As shown in FIG. 11, the coating 502 may be applied in the heel area 32 and the toe box area 34. In addition, in some aspects, as shown in FIGs. 12-14, the coating 502 covers at least part of the bottom 504, and in some aspects covers the entire bottom 504 (as best seen in FIG. 12). In some aspects, coating 502 is applied as a spray coating. The coating 502 can include one or more of polyurethanes (such as TPU), polyamides, polyolefins, or nylons. In such aspects, the coating 502 can provide additional stability and rigidity, as well as function as a moisture barrier. Further, the coating 502, in cooperation with the braided shell 14, provides a traction surface as the textured surface created by the braided shell 14 is preserved by the coating 502, In other words, in some aspects, coating 502 does not provide a smooth surface over braided shell 14 in at least some areas. Instead, the yarns of the braided shell 14 create a textured surface 506 as best seen in FIG. 14. In some aspects, this textured surface 506 forms the outer surface of the braided article of footwear 500, such as at bottom 504. In some aspects, the coating 502 penetrates through openings in the outer braided shell 14 and adheres to both the outer braided shell 14 and the portions of the inner booty 12, coupling the inner booty 12 to the outer braided shell 14. As best seen in FIG. 13 and 14, in some aspects, the braided article of footwear also includes an insole 508 that may provide added cushioning and comfort.

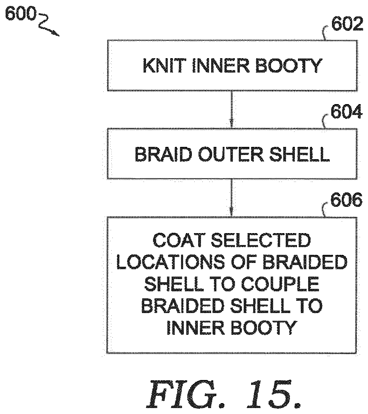

A method 600 for manufacturing a multi-layer upper for an article of footwear is shown in FIG. 15. The method includes knitting an inner booty, as shown at block 602. The inner booty of block 602 in some aspects has the characteristics described above with respect to inner booty 12. The method continues at block 604 by braiding an outer braided shell. The outer braded shell of block 604, in some aspects, has the characteristics described above with respect to outer braided shell 14. In some aspects, the method 600 continues at block 606 by coating selected locations of the outer braided shell, to couple the outer braided shell to the inner booty at the selected locations (leaving other locations of the outer braided shell uncoated, and uncoupled to the inner booty). In some aspects, the coating is a spray coating such as coating 503 described above with reference to FIGS. 11-14.

Many different arrangements of the various components depicted, as well as components not shown, are possible without departing from the scope of the present disclosure as defined by the appended claims.

## Claims

1. A method of manufacturing an upper for an article of footwear, the upper having a toe end, a heel end, a medial side, and a lateral side, the method comprising: knitting an inner booty (12) that extends from the heel end to the toe end, and that has an opening for a foot in the as worn condition; braiding an outer shell (14) with a shape that extends at least partially around the inner booty (12); coating only selected locations of the outer braided shell (14), leaving the other locations of the outer braided shell (14) without the coating (502), to couple the outer braided shell (14) to the inner booty (12) at the selected locations.

2. The method of claim 1, wherein the coating step comprises a spray coating (502).

3. The method of any one of the preceding claims, wherein the selected locations of the outer braided shell (14) comprise a heel area (32) and/or a toe box area (34).

4. The method of any one of the preceding claims, wherein the selected locations of the outer braided shell (14) comprise at least part of a bottom (504), particularly wherein the selected locations of the outer braided shell (14) comprise the entire bottom (504).

5. The method of any one of the preceding claims, wherein the coating (502) includes one or more of polyurethanes (such as TPU), polyamides, polyolefins, or nylons.

6. The method of any one of the preceding claims, wherein the coating (502), in cooperation with the outer braided shell (14), is configured to provide a traction surface.

7. The method of any one of the preceding claims, wherein yarns of the outer braided shell (14) are configured to create a textured surface (506).

8. The method of claim 7, wherein the textured surface (506) is arranged to form an outer surface of the article of footwear, particularly wherein the outer surface is a bottom surface (504).

9. The method of any one of the preceding claims, further comprising providing an insole (508) configured to provide added cushioning.

10. A braided article of footwear (10) with an upper having a toe end, a heel end, a medial side, and a lateral side, the upper comprising:
an inner booty (12) extending from the heel end to the toe end, having an opening for a foot in the as worn condition;
an outer braided shell (14) extending at least partially around the inner booty (12); and
a coating (502) configured to cover the outer braided shell (14) in selected areas of the upper, wherein the coating (502) is arranged to penetrate through openings in the outer braided shell (14) and to adhere to both the outer braided shell (14) and portions of the inner booty (12), coupling the inner booty (12) to the outer braided shell (14).

11. The braided article of footwear (10) of claim 10, wherein the selected areas of the upper comprise a heel area (32), a toe box area (34), and/or at least part of a bottom (504).

12. The braided article of footwear (10) of any one of claims 10 to 11, wherein the coating (502) includes one or more of polyurethanes (such as TPU), polyamides, polyolefins, or nylons.

13. The braided article of footwear (10) of any one of claims 10 to 12, wherein the coating (502), in cooperation with the outer braided shell (14), is configured to provide a traction surface.

14. The braided article of footwear (10) of any one of claims 10 to 13, wherein yarns of the outer braided shell (14) are configured to create a textured surface (506), wherein, optionally, the textured surface (506) is arranged to form an outer surface of the article of footwear, wherein, optionally, the outer surface is a bottom surface (504).

15. The braided article of footwear (10) of any one of claims 10 to 14, further comprising an insole (508).

## Patentansprüche

1. Ein Verfahren zur Herstellung eines Oberteils für einen Fußbekleidungsartikel, wobei das Oberteil ein Zehenende, ein Fersenende, eine mediale Seite und eine laterale Seite aufweist, wobei das Verfahren Folgendes umfasst:
Stricken eines Innenschuhs *(inner booty)* (12), der sich vom Fersenende zum Zehenende erstreckt und der im Zustand, wie getragen, eine Öffnung für einen Fuß aufweist; Flechten einer äußeren Schale (14) mit einer Form, die sich zumindest teilweise um den Innenschuh (12) erstreckt; Beschichten nur ausgewählter Stellen der äußeren geflochtenen Schale (14), wobei die anderen Stellen der äußeren geflochtenen Schale (14) ohne die Beschichtung (502) belassen werden, um die äußere geflochtene Schale (14) an den ausgewählten Stellen mit dem Innenschuh (12) zu verbinden.

2. Das Verfahren nach Anspruch 1, wobei der Schritt der Beschichtung eine Sprühbeschichtung (502) umfasst.

3. Das Verfahren nach irgendeinem der vorstehenden Ansprüche, wobei die ausgewählten Stellen der äußeren geflochtenen Schale (14) einen Fersenbereich (32) und/oder einen Zehenbox- bzw. Zehenkasten- bzw. Zehenraumbereich (*toe box area*) (34) umfassen.

4. Das Verfahren nach irgendeinem der vorstehenden Ansprüche, wobei die ausgewählten Stellen der äußeren geflochtenen Schale (14) mindestens einen Teil eines Bodens (504) umfassen, insbesondere wobei die ausgewählten Stellen der äußeren geflochtenen Schale (14) den gesamten Boden (504) umfassen.

5. Das Verfahren nach irgendeinem der vorstehenden Ansprüche, wobei die Beschichtung (502) eines oder mehrere von Polyurethanen (wie TPU), Polyamiden, Polyolefinen oder Nylonarten (*nylons*) beinhaltet.

6. Das Verfahren nach irgendeinem der vorstehenden Ansprüche, wobei die Beschichtung (502) im Zusammenspiel mit der äußeren geflochtenen Schale (14) so konfiguriert ist, dass sie eine Traktionsfläche bereitstellt.

7. Das Verfahren nach irgendeinem der vorstehenden Ansprüche, wobei die Garne der äußeren geflochtenen Schale (14) so konfiguriert sind, dass sie eine texturierte Oberfläche (506) erzeugen.

8. Das Verfahren nach Anspruch 7, wobei die texturierte Oberfläche (506) so angeordnet ist, dass sie eine Außenfläche des Fußbekleidungsartikels bildet, insbesondere wobei die Außenfläche eine Bodenfläche (504) ist.

9. Das Verfahren nach irgendeinem der vorstehenden Ansprüche, das ferner das Bereitstellen einer Innensohle (508) umfasst, die so konfiguriert ist, dass sie zusätzliche Polsterung bzw. Dämpfung bietet.

10. Ein geflochtener Fußbekleidungsartikel (10) mit einem Oberteil, das ein Zehenende, ein Fersenende, eine mediale Seite und eine laterale Seite aufweist, wobei das Oberteil Folgendes umfasst:
einen Innenschuh *(inner booty)* (12), der sich vom Fersenende zum Zehenende erstreckt und im Zustand, wie getragen, eine Öffnung für einen Fuß aufweist;
eine äußere geflochtene Schale (14), die sich zumindest teilweise um den Innenschuh (12) erstreckt; und
eine Beschichtung (502), die so konfiguriert ist, dass sie die äußere geflochtene Schale (14) in ausgewählten Bereichen des Oberteils bedeckt, wobei die Beschichtung (502) so angeordnet ist, dass sie durch Öffnungen in der äußeren geflochtenen Schale (14) dringt und dass sie sowohl an der äußeren geflochtenen Schale (14) als auch an Abschnitten des Innenschuhs (12) haftet, wodurch der Innenschuh (12) mit der äußeren geflochtenen Schale (14) gekoppelt wird.

11. Der geflochtene Fußbekleidungsartikel (10) nach Anspruch 10, wobei die ausgewählten Bereiche des Oberteils einen Fersenbereich (32), einen Zehenbereich (34) und/oder mindestens einen Teil eines Bodens (504) umfassen.

12. Der geflochtene Fußbekleidungsartikel (10) nach irgendeinem der Ansprüche von 10 bis 11, wobei die Beschichtung (502) eines oder mehrere von Polyurethanen (wie TPU), Polyamiden, Polyolefinen oder Nylonarten (*nylons*) beinhaltet.

13. Der geflochtene Fußbekleidungsartikel (10) nach irgendeinem der Ansprüche von 10 bis 12, wobei die Beschichtung (502) im Zusammenspiel mit der äußeren geflochtenen Schale (14) so konfiguriert ist, dass sie eine Traktionsfläche bereitstellt.

14. Der geflochtene Fußbekleidungsartikel (10) nach irgendeinem der Ansprüche von 10 bis 13, wobei Garne der äußeren geflochtenen Schale (14) so konfiguriert sind, dass sie eine texturierte Oberfläche (506) erzeugen, wobei, optional, die texturierte Oberfläche (506) so angeordnet ist, dass sie eine äußere Oberfläche des Fußbekleidungsartikels bildet, wobei, optional, die äußere Oberfläche eine Bodenfläche (504) ist.

15. Der geflochtene Fußbekleidungsartikel (10) nach irgendeinem der Ansprüche von 10 bis 14, der ferner eine Innensohle (508) umfasst.

## Revendications

1. Un procédé de fabrication d'une tige pour un article chaussant, la tige présentant une extrémité d'orteil, une extrémité de talon, un côté médial, et un côté latéral, le procédé comprenant le fait de :
tricoter une chaussure intérieure (*inner booty*) (12) qui s'étend de l'extrémité de talon à l'extrémité d'orteil et qui présente dans une condition comme à l'état porté une ouverture pour un pied ; tresser une coque ou encore enveloppe extérieure (14) dont la forme s'étend au moins partiellement autour de la chaussure intérieure (12) ; ne revêtir que des endroits sélectionnés de l'enveloppe tressée extérieure (14), en laissant les autres endroits de l'enveloppe tressée extérieure (14) sans revêtement (502), afin de coupler l'enveloppe tressée extérieure (14) à la chaussure intérieure (12) aux endroits sélectionnés.

2. Le procédé d'après la revendication 1, sachant que l'étape de revêtement comprend un revêtement par projection (502).

3. Le procédé d'après l'une quelconque des revendications précédentes, sachant que les endroits sélectionnés de l'enveloppe tressée extérieure (14) comprennent une zone de talon (32) et/ou une zone de boîte à orteils (*toe box area*) (34).

4. Le procédé d'après l'une quelconque des revendications précédentes, sachant que les endroits sélectionnés de l'enveloppe tressée extérieure (14) comprennent au moins une partie d'un fond (504), notamment sachant que les endroits sélectionnés de l'enveloppe tressée extérieure (14) comprennent la totalité du fond (504).

5. Le procédé d'après l'une quelconque des revendications précédentes, sachant que le revêtement (502) inclut un ou plusieurs parmi des polyuréthanes (tels que TPU), des polyamides, des polyoléfines ou des nylons.

6. Le procédé d'après l'une quelconque des revendications précédentes, sachant que le revêtement (502), en coopération avec l'enveloppe tressée extérieure (14), est configuré pour fournir une surface de traction.

7. Le procédé d'après l'une quelconque des revendications précédentes, sachant que les fils de l'enveloppe tressée extérieure (14) sont configurés pour créer une surface texturée (506).

8. Le procédé d'après la revendication 7, sachant que la surface texturée (506) est agencée de manière à former une surface extérieure de l'article chaussant, notamment sachant que la surface extérieure est une surface de fond (504).

9. Le procédé d'après l'une quelconque des revendications précédentes, comprenant en outre le fait de fournir une semelle intérieure (508) configurée pour fournir un amortissement supplémentaire.

10. Un article chaussant tressé (10) avec une tige présentant une extrémité d'orteil, une extrémité de talon, un côté médial et un côté latéral, la tige comprenant :
une chaussure intérieure *(inner booty)* (12) qui s'étend de l'extrémité de talon à l'extrémité d'orteil, et qui présente dans une condition comme à l'état porté une ouverture pour un pied ;
une coque ou encore enveloppe tressée extérieure (14) s'étendant au moins partiellement autour de la chaussure intérieure (12) ; et
un revêtement (502) configuré pour couvrir l'enveloppe tressée extérieure (14) dans des zones sélectionnées de la tige, sachant que le revêtement (502) est agencé de manière à pénétrer à travers les ouvertures de l'enveloppe tressée extérieure (14) et pour adhérer à la fois à l'enveloppe tressée extérieure (14) et à des portions de la chaussure intérieure (12), en couplant la chaussure intérieure (12) à l'enveloppe tressée extérieure (14).

11. L'article chaussant tressé (10) d'après la revendication 10, sachant que les zones sélectionnées de la tige comprennent une zone de talon (32), une zone de boîte à orteils (*toe box area*) (34), et/ou au moins une partie d'un fond (504).

12. L'article chaussant tressé (10) d'après l'une quelconque des revendications de 10 à 11, sachant que le revêtement (502) inclut un ou plusieurs parmi des polyuréthanes (tels que TPU), des polyamides, des polyoléfines ou des nylons.

13. L'article chaussant tressé (10) d'après l'une quelconque des revendications de 10 à 12, sachant que le revêtement (502), en coopération avec l'enveloppe tressée extérieure (14), est configuré pour fournir une surface de traction.

14. L'article chaussant tressé (10) d'après l'une quelconque des revendications de 10 à 13, sachant que des fils de l'enveloppe tressée extérieure (14) sont configurés pour créer une surface texturée (506), sachant que, facultativement, la surface texturée (506) est agencée pour former une surface extérieure de l'article chaussant, sachant que, facultativement, la surface extérieure est une surface de fond (504).

15. L'article chaussant tressé (10) d'après l'une quelconque des revendications de 10 à 14, comprenant en outre une semelle intérieure (508).
